# EUROPÄISCHE PATENTSCHRIFT

(11) **EP 2 019 215 B1**
(45) Veröffentlichungstag und Bekanntmachung des Hinweises auf die Patenterteilung: **07.11.2012**
(21) Anmeldenummer: 08011316.0
(22) Anmeldetag: 21.06.2008
(51) Int. Cl.: F16B 39/34, F16B 33/06

(54) **Befestigungsmutter**
Fixing nut
Ecrou de fixation

(30) Priorität: 25.07.2007 DE 102007035136; 19.09.2007 DE 102007044682
(43) Veröffentlichungstag der Anmeldung: 28.01.2009
(73) Patentinhaber: Winker Massivumformung GmbH & Co. KG, 78549 Spaichingen (DE)
(72) Erfinder: Winker, Alexander, Dr., 79549 Spaichingen (DE); Meßmer, Günther, Dr., 78589 Dürbheim (DE); Grimm, Elmar, 78652 Deisslingen (DE); Schmidt, Reinhard, 78549 Spaichingen (DE)
(74) Vertreter: Winter, Martina

(56) Entgegenhaltungen:
- GB-A- 228 505
- GB-A- 662 298
- US-A- 2 348 308
- US-A- 2 502 642
- US-A- 5 890 857

## Beschreibung

Die vorliegende Erfindung betrifft eine Befestigungsmutter mit einem Mutternkörper und einer Gewindebohrung, wobei der Mutternkörper eine die Gewindebohrung umgebende Auflagefläche aufweist, die von einem umlaufenden Bördelkragen umgeben ist, wobei auf der Auflagefläche ein als Verliersicherung dienender Ring angeordnet und durch den umgebördelten Bördelkragen gehalten ist.

Derartige Befestigungsmuttern werden vor der Montage mit einem als Verliersicherung dienenden Ring versehen. Ein solcher, üblicherweise aus einem Kunststoff bestehender Ring wird auf die Auflagefläche gelegt und durch Umbördeln des Bördelkragens gehalten. Der Ring bewirkt, dass ein zusätzliches Drehmoment auf die fertige Schraubverbindung aufgebracht und somit das auf die Schraubverbindung aufgebrachte Drehmoment erhöht wird. Dadurch wird verhindert, dass sich die Befestigungsmutter infolge der Belastung der Schraubverbindung lockert oder sich gar vom Bolzen löst.

Der Mutternkörper einer solchen Befestigungsmutter kann bspw. aus einem hochfesten Werkstoff, bspw. einem hochfesten Stahl bestehen. Insbesondere in diesem Fall wird eine derartige Befestigungsmutter in der Regel mit einer Zink-Lamellen-Beschichtung versehen, die als Korrosionsschutz dient. Während des Beschichtungsvorgangs wird der Kunststoffring durch Feuchtigkeit und hohe Temperaturen belastet. Dies führt dazu, dass der Kunststoff zum Kriechen neigt, wodurch er sich setzt bzw. schwindet, so dass der Ring insgesamt schrumpft und nicht mehr fest zwischen Auflagefläche und Bördelkragen gehalten ist. Das bedeutet wiederum, dass er bei der Montage der Befestigungsmutter aus dem Haltekragen herausgepresst wird, so dass die angestrebte Drehmomenterhöhung nicht erreicht werden kann.

Zur Lösung dieses Problems werden bisher nach dem Umbördeln des Bördelkragens den Ring sichernde Vertiefungen in die Außenfläche des Bördelkragens eingeprägt. Dies stellt einen zusätzlichen Verfahrensschritt dar, der die Herstellungskosten erhöht. Dies ist jedoch bei Massenprodukten, wozu diese Befestigungsmutter gehört, von großem Nachteil. Darüber hinaus wird die Zink-Lamellen-Schicht durch einen nachfolgenden Prägevorgang angegriffen, so dass ein zuverlässiger Korrosionsschutz nicht mehr gegeben ist.

Eine Montage des Rings nach dem Aufbringen der Zink-Lamellen-Beschichtung ist nicht möglich, weil die Beschichtung beim Umbördeln des Bördelkragens wieder abplatzen würde. Darüber hinaus ist kein Kunststoff bekannt, der gegenüber den Einbrenntemperaturen handelsüblicher Zink-Lamellen-Beschichtungen so beständig ist, dass er während des Beschichtungsvorgangs stabil bleibt.

Die GB 662, 298 offenbart eine selbstsichernde Mutter mit einem Mutternkörper, die eine Endfläche aufweist, über die sich eine ringförmige Wand erhebt. Auf der Endfläche sind mit Abstand im Kreis angeordnete Erhöhungen angeordnet. Eine elastische Ringscheibe ist derart eingesetzt, dass die Erhöhungen in die Ringscheibe eindringen, um ein Verdrehen der Ringscheibe zu verhindern, wenn das freie Ende der Wand über die Scheibe umgebördelt ist.

Die US 2,348, 308 zeigt eine Mutter mit einem zylinderförmigen Hals. Auf einer ringförmigen Fläche sind radial ausgerichtete vertikale Zähne ausgebildet. Innerhalb des Halses ist eine Scheibe eingelegt, in deren Stirnfläche die Zähne eindringen. Die Scheibe ist in der Mutter mittels eines radial nach innen umgebördelten Randes gehalten.

Die Aufgabe der vorliegenden Erfindung besteht darin, eine gattungsgemäße Befestigungsmutter so weiterzubilden, dass eine kostengünstigere Herstellung möglich ist und die Verliersicherung optimiert wird.

Die Lösung besteht in einer Befestigungsmutter mit den Merkmalen des Patentanspruchs 1. Erfindungsgemäß ist vorgesehen, dass die Auflagefläche plan ausgebildet ist, dass in der Innenwand des Bördelkragens eine umlaufende Rille vorgesehen ist und dass oberhalb der Rille in der Innenwand radial nach innen ragende Erhöhungen ausgebildet sind.

Die erfindungsgemäße Befestigungsmutter zeichnet sich also dadurch aus, dass der als Verliersicherung dienende Ring plan auf einer ebenen Fläche aufliegt, so dass seine Formstabilität optimiert ist, weil er nur über seine obere Stirnfläche drehsicher gehalten ist.

Die erfindungsgemäß vorgesehenen Erhöhungen können bei der Herstellung der Befestigungsmutter, bspw. durch Warmumformen oder Kaltumformen, problemlos eingeformt werden. Die erfindungsgemäß vorgesehenen Erhöhungen bewirken, dass das beim Beschichten der Befestigungsmutter auftretende Schrumpfen des Rings ausgeglichen wird, so dass der Ring auch nach dem Beschichtungsvorgang fest am Mutternkörper gehalten ist. Damit ist sichergestellt, dass bei der Montage der Befestigungsmutter der Ring zuverlässig mit dieser mitdreht, so dass das gewünschte zusätzliche Drehmoment zuverlässig auf die Schraubverbindung aufgebracht wird.

Da die erfindungsgemäße Befestigungsmutter Erhöhungen nur in der Innenwand des Bördelkragens aufweist und die Auflagefläche für den als Verliersicherung dienenden Ring plan ausgebildet ist, ist es möglich, jeden beliebigen weichen oder harten Werkstoff für den Ring zu verwenden. Der Ring wird mittels der in der Innenwand des Bördelkragens vorgesehenen Erhöhungen satt gegen die plane Auflagefläche gepresst, so dass stets ein definierter Kraftschluss zwischen der Auflagefläche und dem Ring wirksam ist. Ferner kann, je nach dem verwendeten Werkstoff des Rings ein Formschluss zwischen dem Ring und den Erhöhungen in der Innenwand des Bördelkragens erzielt werden. Ferner wird eine Werkstoffauswahl ermöglicht, die es erlaubt, auf Werkstoffe zu verzichten, bei denen im Betrieb die Gefahr besteht, dass sie aufgrund von Alterungsprozessen zu stark schrumpfen oder verspröden.

Vorteilhafte Weiterbildungen ergeben sich aus den Unteransprüchen.

Bevorzugt sind vier, sechs oder acht Erhöhungen vorgesehen, die zweckmäßigerweise symmetrisch um die Gewindebohrung gruppiert sein sollten. Damit wird eine besonders wirkungsvolle Sicherung des Rings am Mutternkörper erzielt.

Die Erhöhungen können eine beliebige Form aufweisen. Beispielhaft seien halbkugelförmige, kalottenförmige, pyramidenförmige, rechteckförmige sowie dachkantförmige Erhöhungen genannt. Die Form der Erhöhungen ergibt sich im Einzelfall aus ihrer Zweckmä-ßigkeit bei der Herstellung der Befestigungsmutter.

Der als Verliersicherung dienende Ring besteht in der Regel aus einem Kunststoff, vorzugsweise aus einem Polyamid.

Ausführungsbeispiele der vorliegenden Erfindung werden im Folgenden anhand der beigefügten Zeichnungen näher erläutert. Es zeigen in schematischer, nicht maßstabsgetreuer Darstellung:
- Figur 1: ein Ausführungsbeispiel des Mutternkörpers einer erfindungsgemäßen Befestigungsmutter im Schnitt;
- Figur 2: die Befestigungsmutter gemäß Figur 1 mit Ring.

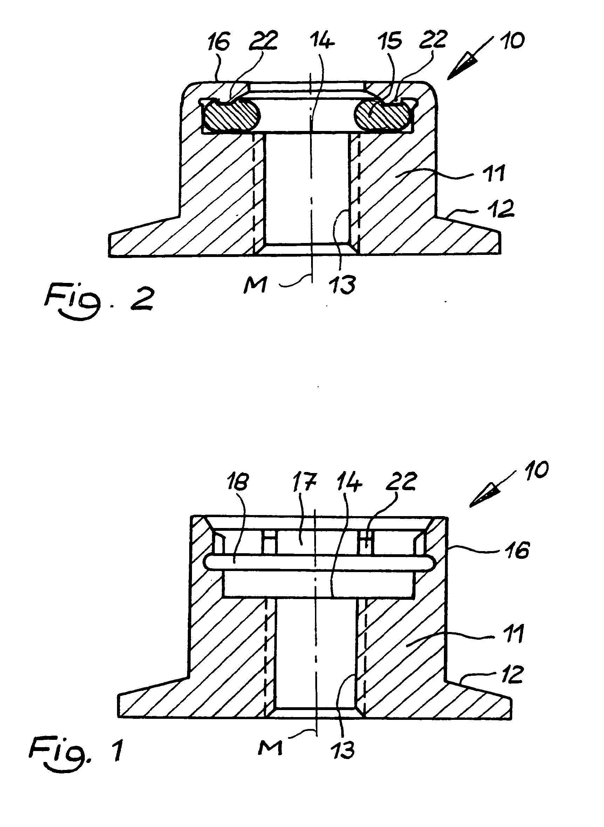

Das in Figur 1 teilweise gezeigte Ausführungsbeispiel einer erfindungsgemäßen Befestigungsmutter 10 weist einen Mutternkörper 11 mit einem umlaufenden radial verbreiterten Bund 12 auf. Der Mutternkörper 11 ist mit einer axialen Gewindebohrung 13 zur Aufnahme eines Gewindebolzens (nicht dargestellt) versehen. Die Befestigungsmutter 10 kann bspw. aus einem hochfesten Stahl hergestellt sein.

Der Mutternkörper weist an seinem dem radial verbreiterten Bund 12 gegenüberliegenden Ende eine die Gewindebohrung umgebende Auflagefläche 14 für einen als Verliersicherung dienenden Ring 15 (vgl. Figur 2) auf. Die Auflagefläche 14 erstreckt sich in radialer Richtung in etwa senkrecht zur Mittelachse M der Befestigungsmutter 10. Figur 1 zeigt den Mutternkörper 11 nach seiner Herstellung vor dem Einlegen des Rings 15.

Die Auflagefläche 14 ist entlang ihrem Außenumfang von einem umlaufenden Bördelkragen 16 umgeben. Der Bördelkragen 16 erstreckt sich in etwa parallel zur Mittelachse M der Befestigungsmutter 10 und weist eine Innenwand 17 auf.

Der Bördelkragen 16 der Befestigungsmutter 10 ist entlang seiner Innenwand 17 erfindungsgemäß mit Erhöhungen 22 versehen. Die Erhöhungen 22 sind oberhalb einer Rille 18 gleichmäßig in der Innenwand 17 verteilt angeordnet. Die Erhöhungen 22 werden bei umgebördeltern Bördelkragen 16 in den Ring 15 hineingedrückt, so dass der Ring 15 auf diese Weise an dem Mutternkörper 11 fixiert wird (vgl. Figur 2).

Figur 2 zeigt die Befestigungsmutter 10 in montagefertigem Zustand mit umgebördeltem Bördelkragen 16. Der Bördelkragen 16 hält den Ring 15 an dem Mutternkörper 11. Der Ring 15 wird ferner gegen die Erhöhungen 22 gepresst. Dies bewirkt, dass der Ring 15 auch nach dem Aufbringen der Zink-Lamellen-Beschichtung auf dem Mutternkörper 11 sicher fixiert ist.

Es können bspw. sechs Erhöhungen 22 symmetrisch rund um die Gewindebohrung 13 auf der Innenwand 17 angeordnet sein. Andere Anordnungen der Erhöhungen 22 sind selbstverständlich möglich.

Der Mutternkörper 11 der erfindungsgemäßen Befestigungsmutter 10 kann durch dem Fachmann bekannte Umformprozesse in einem Arbeitsschritt hergestellt werden, bspw. durch Kalt- oder Warmpressen.

## Patentansprüche

1. Befestigungsmutter (10) mit einem Mutternkörper (11) und einer Gewindebohrung (13), wobei der Mutternkörper (11) eine die Gewindebohrung (13) umgebende Auflagefläche (14) aufweist, die von einem umlaufenden Bördelkragen (16) umgeben ist, wobei auf der Auflagefläche (14) ein als Verliersicherung dienender Ring (15) angeordnet und durch den umgebördelten Bördelkragen (16) gehalten ist, **dadurch gekennzeichnet, dass** die Auflagefläche (14) plan ausgebildet ist, dass in der Innenwand (17) des noch nicht umgebördelten Bördelkragens (16) eine umlaufende Rille (18) vorgesehen ist und dass oberhalb der Rille (18) in der Innenwand (17) des noch nicht umgebördelten Bördelkragens radial nach innen ragende Erhöhungen (22) ausgebildet sind.

2. Befestigungsmutter nach Anspruch 1, **dadurch gekennzeichnet, dass** vier, sechs oder acht Erhöhungen (22) vorgesehen sind.

3. Befestigungsmutter nach Anspruch 1 oder 2, **dadurch gekennzeichnet, dass** die Erhöhungen (22) halbkugelförmig, kalottenförmig, pyramidenförmig, rechteckförmig und/oder dachkantförmig ausgebildet sind.

4. Befestigungsmutter nach einem der Patentansprüche 1 bis 3, **dadurch gekennzeichnet, dass** der Ring (15) aus einem Kunststoff, vorzugsweise aus einem Polyamid, besteht.

## Claims

1. Locking nut (10) having a nut body (11) and a threaded bore (13), said nut body (11) comprising a bearing surface (14) which surrounds the threaded bore (13), said bearing surface (14) being surrounded by a circumferential flange rim (16), wherein a ring (15) serving as a retainer is located on the bearing surface (14) and held by the flange rim (16), **characterized in that** the bearing surface (14) is formed as a flat surface, that a circumferential groove (18) is provided in the inner wall (17) of the flange rim (16) not yet flanged and that elevations (22) which are extending radially inward are provided above the groove (18) in the inner wall (17) of the flange rim (16) not yet flanged.

2. Locking nut according to claim 1, **characterized in that** four, six or eight elevations (22) are provided.

3. Locking nut according to any of the claims 1 or 2, **characterized in that** the elevations (22) are hemispherical-shaped, dome-shaped, pyramid-shaped, rectangular-shaped and/or roof-edge-shaped.

4. Locking nut according to any of the claims 1 to 3, **characterized in that** the ring (15) is made of plastic, preferably of a polyamide.

## Revendications

1. Écrou de fixation (10) avec un corps (11) d'écrou et un trou fileté (13), le corps (11) d'écrou comprenant une surface (14) d'appui entourant le trou fileté (13), où la surface (14) d'appui est entourée par une jante (16) de sertissage circonférentielle, où une bague (15) servent de dispositif de retenue est située sur la surface (14) d'appui et est fixée par la jante (16) de sertissage, **caractérisé en ce que** la surface (14) d'appui est une surface plane, qu'une rainure (18) circonférentielle est fournie dans la paroi (17) interne de la jante (16) de sertissage pas encore sertie et que des élévations (22) s'étendant radialement vers l'intérieur sont fournies au-dessus la rainure (18) dans la paroi(17) interne de la jante (16) de sertissage pas encore sertie.

2. Écrou de fixation selon la revendication 1, **caractérisé en ce que** quatre, six ou huit élévations (22) sont fournies.

3. Écrou de fixation selon l'une quelconque des revendications 1 ou 2. **caractérisé en ce que** les élévations (22) sont de forme hémisphérique, de forme de dôme, de forme pyramidale, de forme rectangulaire et/ou de forme de bord de toît.

4. Écrou de fixation selon l'une quelconque des revendications 1 à 3, **caractérisé en ce que** la bague (15) est fabriquée de plastique, préférablement d'un polyamide.
